# EUROPÄISCHE PATENTSCHRIFT

(11) **EP 3 833 491 B1**
(45) Veröffentlichungstag und Bekanntmachung des Hinweises auf die Patenterteilung: **27.04.2022**
(21) Anmeldenummer: 19749322.4
(22) Anmeldetag: 01.08.2019
(51) Int. Cl.: B08B 3/02, B64F 5/30, F01D 25/00, B08B 9/00

(54) **VORRICHTUNG UND ANORDNUNG ZUR REINIGUNG DER CORE ENGINE EINES STRAHLTRIEBWERKS**
DEVICE AND ARRANGEMENT FOR CLEANING OF THE CORE ENGINE OF A JET ENGINE
DISPOSITIF ET AGENCEMENT POUR NETTOYER LE RÉACTEUR DE BASE D'UN MOTEUR À RÉACTION

(30) Priorität: 06.08.2018 DE 102018119092
(43) Veröffentlichungstag der Anmeldung: 16.06.2021
(73) Patentinhaber: Lufthansa Technik AG, 22335 Hamburg (DE)
(72) Erfinder: DEJA, Dirk, 64569 Nauheim (DE); LUTZ, Christian, 63743 Aschaffenburg (DE); HACKER, Marc, 60388 Frankfurt am Main (DE)
(74) Vertreter: Glawe, Delfs, Moll
(86) Internationale Anmeldenummer: PCT/EP2019/070741
(87) Internationale Veröffentlichungsnummer: WO 2020/030514

(56) Entgegenhaltungen:
- DE-U1-202013 005 524
- US-A- 5 868 860
- US-A1- 2014 034 091
- US-B1- 7 445 677

## Beschreibung

Die Erfindung betrifft eine Vorrichtung zum Reinigen der Core Engine eines Strahltriebwerks, mit einer Düseneinrichtung, die zum Einbringen von Reinigungsmedium in die Core Engine ausgebildet ist und Mittel zur drehfesten Verbindung mit der Welle des Fans des Strahltriebwerks aufweist; und mit einer Leitungsverbindung zum Zuführen von Reinigungsmedium, die über eine Drehkupplung mit der Düseneinrichtung verbunden ist.

Gegenstand der Erfindung ist ferner eine Anordnung aus einer solchen Vorrichtung und einem Strahltriebwerk.

Strahltriebwerke von kommerziellen Unterschallverkehrsflugzeugen sind heute weit überwiegend Turbofan-Strahltriebwerke. Ein solches Turbofan-Triebwerk besitzt eine Core Engine, in der der eigentliche Verbrennungsprozess des Kerosins abläuft. Die Core Engine besitzt in bekannter Weise eine oder mehrere Kompressorstufen, eine Brennkammer, sowie eine oder mehrere Turbinenstufen, in denen die heißen Verbrennungsgase einen Teil ihrer mechanischen Energie abgeben. Diese mechanische Energie wird zum einen für den Antrieb der Kompressorstufen benötigt, zum anderen wird ein stromauf vor der Core Engine angeordneter Turbofan angetrieben, der in der Regel einen erheblich größeren Durchmesser als die Core Engine aufweist und einen erheblichen Teil der das Triebwerk insgesamt durchströmenden Luft als Mantel- oder Nebenluftstrom an der Core Engine vorbeiströmen lässt. Der Turbofan bringt über diesen Mantelluftstrom einen erheblichen Teil der Schubleistung des Triebwerks auf, ferner sorgt der hohe Mantelluftstromanteil für eine bessere Umweltverträglichkeit des Triebwerks, insbesondere einen besseren Wirkungsgrad bei Unterschallgeschwindigkeiten, sowie eine verbesserte Geräuschdämmung des heißen Abgasstroms der Core Engine.

Strahltriebwerke werden im Betrieb durch Verbrennungsrückstände der Core Engine sowie durch mit der Verbrennung bzw. Mantelluft angesaugte Luftverunreinigungen wie beispielsweise Staub, Insekten, Salznebel oder sonstigen Umweltverunreinigungen kontaminiert. Diese Verunreinigungen bilden insbesondere auch auf den Rotor- und/oder Statorblades des Kompressors der Core Engine einen Belag, der die Oberflächengüte und damit letztendlich den thermodynamischen Wirkungsgrad des Triebwerks beeinträchtigt.

Zum Entfernen der Verunreinigungen werden Strahltriebwerke gereinigt. Aus WO 2005/077554 A1 ist es bekannt, zu diesem Zweck eine Mehrzahl von Reinigungsdüsen stromauf des Fans eines Turbofan-Triebwerks anzuordnen, um so den Fan und die Core Engine zu reinigen.

Die Dokumente WO 2008/113501 A1, DE 20 2013 005 524 U1 und US 7,445,677 B1 offenbaren Vorrichtungen der eingangs genannten Art, die auf den Fan aufgesetzt werden und im Reinigungsbetrieb mitrotieren.

Der Erfindung liegt die Aufgabe zugrunde, eine Vorrichtung und Anordnung der eingangs genannten Art zu schaffen, die Vorteile in der Handhabung und im Betrieb aufweist.

Zur Lösung dieser Aufgabe ist erfindungsgemäß vorgesehen, dass die Düseneinrichtung erste Anlageflächen zur axialen Anlage an den Fan Blades aufweist, die zur definierten Positionierung der Düseneinrichtung relativ zum Strahltriebwerk ausgebildet sind.

Gegenstand der Erfindung ist ferner eine Anordnung aus einem Strahltriebwerk und einer daran zur Vornahme einer Reinigung der Core Engine angebrachten erfindungsgemäßen Vorrichtung, mit den Merkmalen:
a. die Düseneinrichtung ist drehfest mit der Welle des Fans des Strahltriebwerks verbunden;
b. die Drehachsen des Fans des Strahltriebwerk und der Düseneinrichtung sind im Wesentlichen konzentrisch angeordnet;
c. die Düsen der Düseneinrichtung weisen einen radialen Abstand von der gemeinsamen Drehachse des Strahltriebwerks und der Vorrichtung auf, der kleiner ist als der Radius der Eintrittsöffnung der Core Engine;
d. die Austrittsöffnungen der Düsen sind in Axialrichtung hinter der Ebene des Fans angeordnet und/oder die Düsen sind in Zwischenräumen der Fanblades angeordnet oder auf Zwischenräume der Fanblades ausgerichtet, so dass die Düsenstrahlen im Wesentlichen ungehindert durch die Ebene des Fans hindurchtreten können; gekennzeichnet durch die Merkmale:
e. die ersten Anlageflächen der Düseneinrichtung liegen an Fan Blades des Strahltriebwerks an und bewirken eine definierte axiale Positionierung der Düseneinrichtung relative zum Strahltriebwerk.

Zunächst seien einige im Rahmen der Erfindung verwendete Begriffe erläutert. Der Begriff Strahltriebwerk bezeichnet jegliche mobilen Gasturbinen für Luftfahrtanwendungen. Im Rahmen der Erfindung bezeichnet der Begriff insbesondere Turbofan-Triebwerke, bei denen die eigentliche Gasturbine eine sogenannte Core Engine bildet und stromauf der Core Engine ein im Durchmesser größerer Turbofan angeordnet ist, der einen Mantelluftstrom um die Core Engine erzeugt. Der Begriff Core Engine bezeichnet die eigentliche Gasturbine des Strahltriebwerks, in der der Verbrennungsprozess des Treibstoffs, insbesondere Kerosins, stattfindet. Eine solche Core Engine weist in der Regel eine oder mehrere Kompressorstufen, eine Brennkammer sowie ein oder mehrere Turbinenstufen auf, die von den heißen Verbrennungsgasen angetrieben werden.

Die Düseneinrichtung weist eine oder mehrere Düsen für das Reinigungsmedium sowie unten noch näher erläuterte Mittel zur drehfesten Verbindung dieser Düseneinrichtung und damit der Düsen mit der Welle des Fans des Strahltriebwerks auf.

Mittels Leitungsverbindung und Drehkupplung wird das Reinigungsmedium der Düseneinrichtung zugeführt. Der Begriff Leitungsverbindung ist im Rahmen der Erfindung weit zu verstehen und kann beispielsweise auch das stationäre (nicht mitdrehende) Anschlussstück an der Drehkupplung umfassen.

Eine nicht vom Patentanspruch umfasste Versorgungseinrichtung stellt Reinigungsmedium zur Verfügung (beispielsweise in einem oder mehreren Tanks) und kann mit Bedienungs- und Antriebseinrichtungen, Pumpen, Energiespeichern oder dergleichen versehen sein. Sie ist vorzugsweise als eine mobile, insbesondere fahrbare Einheit ausgebildet.

Die Düseneinrichtung weist erste Anlageflächen zur axialen Anlage an den Fan Blades auf. Beim Aufsetzen der Düseneinrichtung auf den Spinner des Strahltriebwerks bilden diese definierten ersten Anlageflächen einen Anschlag, der die Düseneinrichtung zumindest in Axialrichtung relativ zum Strahltriebwerk definiert positioniert. Beim Aufsetzen kommen diese ersten Anlageflächen gegen Fan Blades in Axialrichtung zur Anlage und stoppen somit die Aufsetzbewegung. Anschließend wird die Düseneinrichtung, wie unten näher erläutert, an den Fan Blades befestigt, die Mittel zur drehfesten Verbindung bringen dabei in Axialrichtung wirkende Kräfte (Zugkräfte) dergestalt auf, dass die definierte axiale Positionierung durch Anlage an den Fan Blades im Reinigungsbetrieb erhalten bleibt.

Die ersten Anlageflächen sind bevorzugt gepolstert und/oder elastisch, beispielsweise als Gummipuffer, ausgebildet. Es handelt sich um mehrere Anlageflächen, bevorzugt drei oder mehr Anlageflächen, die bevorzugt in gleichmäßigen Winkelabstand über den Umfang verteilt sind. Die Erstreckung der Anlageflächen in Radialrichtung sowie Umfangsrichtung ist bevorzugt hinreichend, um eine sichere Positionierung und Kraftaufnahme der aufgesetzten Düseneinrichtung zu bewirken.

Die Erfindung hat erkannt, dass im Stand der Technik gemäß WO 2008/113501 A1 die Positionierung der Düseneinrichtung lediglich durch Anlage bzw. Auflage an/auf dem Spinner regelmäßig zu einer undefinierten und/oder dezentrierten Positionierung der Düseneinrichtung relativ zum Strahltriebwerk führt. Im Reinigungsbetrieb bewirkt dies eine Unwucht und/oder einen hohen Verschleiß der Drehkupplung. Hingegen erlaubt die erfindungsgemäß vorgesehene axiale Anlage an den Fan Blades eine definierte Positionierung, die sicherstellt, dass die Achse der Düseneinrichtung (und damit der Drehkupplung) stets in gleicher Richtung verläuft wie die Achse des Strahltriebwerks.

Bevorzugt sind die ersten Anlageflächen an einem ersten Ringbereich der Düseneinrichtung angeordnet. Dieser Ringbereich kann bevorzugt als geschlossener Ring ausgebildet sein, der an dem im aufgesetzten Zustand stromabwärts weisenden Endbereich der Düseneinrichtung angeordnet ist. Die in Axialrichtung stromab weisende Fläche dieses Ringbereichs kann erfindungsgemäß über den gesamten Umfang oder über Teilsegmente des Umfangs als (gepolsterte) erste Anlagefläche ausgebildet sein.

Bei der erfindungsgemäßen Anordnung ist bevorzugt der Innendurchmesser des ersten Ringbereichs identisch mit oder geringfügig größer als der Außendurchmesser des Spinners (der Außendurchmesser in der axialen Ebene, in der die Vorderkanten der Fan Blades liegen). Dies trägt dazu bei, die Düseneinrichtung gegenüber dem Strahltriebwerk nicht nur axial, sondern auch radial genau zu positionieren. Geringfügig größer bedeutet in diesem Zusammenhang, dass der erste Ringbereich gegenüber dem Strahltriebwerk im aufgesetzten Zustand lediglich ein solches radiales Spiel aufweist, dass der gewünschte zentrische Sitz nicht oder allenfalls geringfügig beeinträchtigt wird.

Bei einer vorteilhaften Ausführungsform weist die Düseneinrichtung zusätzlich zweite Anlageflächen zur Anlage am Spinner des Strahltriebwerks auf. Diese können beispielsweise an einem zweiten Ringbereich der Düseneinrichtung angeordnet sein, der in Axialrichtung zwischen dem ersten Ringbereich und der Drehkupplung angeordnet ist. Diese zweiten Anlageflächen können ebenfalls elastisch/gepolstert sein. Die zweiten Anlageflächen können bevorzugt zu einer Zentrierung der aufgesetzten Düseneinrichtung auf dem Strahltriebwerk in einer Radialebene zwischen der stromauf gewandten Spitze des Spinners und der Vorderkante der Fan Blades beitragen.

Insgesamt können somit die ersten und zweiten Anlageflächen gemeinsam zur Zentrierung der Vorrichtung auf dem Spinner des Strahltriebwerks ausgebildet sein.

Bei der erfindungsgemäßen Vorrichtung im aufgesetzten Zustand sowie bei der erfindungsgemäßen Anordnung ist bevorzugt die Massenverteilung der Düseneinrichtung rotationssymmetrisch um deren Drehachse.

Erfindungsgemäß umfassen die Mittel zur drehfesten Verbindung mit der Welle des Fans des Strahltriebwerks wenigstens zwei, vorzugsweise drei oder mehr Spannseile und Befestigungsmittel zum Befestigen der Spannseile an den Fanblades. Die Befestigungsmittel sind als separat arretierbare Einzelbefestigungsmittel ausgebildet. Die Verteilung der Befestigungsmittel und/oder Spannseile in Umfangsrichtung kann mit der entsprechenden Verteilung der ersten Auflageflächen korrespondieren oder in Umfangsrichtung zwischen solchen Auflageflächen angeordnet sein.

Die Spannseile sind bevorzugt (beispielsweise mittels Haken bzw. Spannpratzen) an den Fan Blades, bevorzugt an deren Hinterkante, befestigbar. Diese Haken bzw. Spannpratzen können eine hinreichend weiche Kunststoff- oder Gummibeschichtung oder -ummantelung aufweisen.

Die erfindungsgemäße Ausgestaltung der Befestigungsmittel als separat arretierbare Einzelbefestigungsmittel hat wesentliche Vorteile gegenüber der in WO 2008/113501 A1 offenbarten zentralen Spannvorrichtung. In diesem Stand der Technik müssen die Spannseile kompliziert umgelenkt und bis zur Drehkupplung geführt werden, dort ist ein zentraler Spannring vorgesehen, mit dem alle Spannseile gleichzeitig gespannt und damit eine vergleichsweise ungenaue Positionierung der Düseneinrichtung bewirkt wird.

Die erfindungsgemäß vorgesehenen Anlageflächen und die dadurch bewirkte Positionierung der Düseneinrichtung erlauben es, wesentlich einfacher handhabbare Einzelbefestigungsmittel vorzusehen, die sequenziell befestigt und arretiert werden können, da die gewünschte Positionierung bereits durch die Anlageflächen sichergestellt ist. Die Einzelbefestigung erlaubt zudem kurze Spannseile und damit ein einfaches und robustes Spannsystem.

Die Einzelbefestigungsmittel weisen zur Arretierung und Spannung der Spannseile bevorzugt Kniehebel auf. Bei einem Kniehebel ändert sich das Übersetzungsverhältnis zwischen aufgewendeter Kraft zu resultierender Kraft bzw. von primärem Hub zu sekundärem Hub während der Betätigung kontinuierlich. Während der Betätigung in den geschlossenen (arretierten) Zustand nimmt die Hubgeschwindigkeit (ausgeübt auf das Spannseil) bei gleichbleibender Betätigungsgeschwindigkeit ab, die auf das Spannseil ausgeübte Zugkraft hingegen zu.

Diese erfindungsgemäße Ausgestaltung der Einzelbefestigungsmittel erlaubt ein einfaches, sicheres und definiertes Befestigen der Düseneinrichtung an einem Strahltriebwerk ohne Zuhilfenahme von Werkzeug.

Bevorzugt weisen die Einzelbefestigungsmittel Federelemente zur Einstellung einer definierten Vorspannung der Spannseile auf, damit die Düseneinrichtung mit einer definierten Kraft angedrückt wird.

Erfindungsgemäß kann vorgesehen sein, dass die Einzelbefestigungsmittel eine Sicherungseinrichtung zur Sicherung im geschlossenen Zustand aufweisen. Beispielsweise kann der Kniehebel mit einem Splint oder einem Sicherungsstift im geschlossenen Zustand arretiert werden.

Erfindungsgemäß kann vorgesehen sein, dass die Drehkupplung einen Stoßschutz aufweist. Es kann sich beispielsweise um eine insbesondere in Radialrichtung weisende Polsterung (ausgebildet beispielsweise als Kunststoffring) handeln, die die Drehkupplung insbesondere beim Auf- und Absetzen vor Stößen schützt.

Ein Ausführungsbeispiel der Erfindung wird nachfolgend anhand der Zeichnung erläutert. Darin zeigen:
Fig. 1: Schematisch eine Ansicht einer erfindungsgemäßen Vorrichtung montiert an einem Strahltriebwerk;

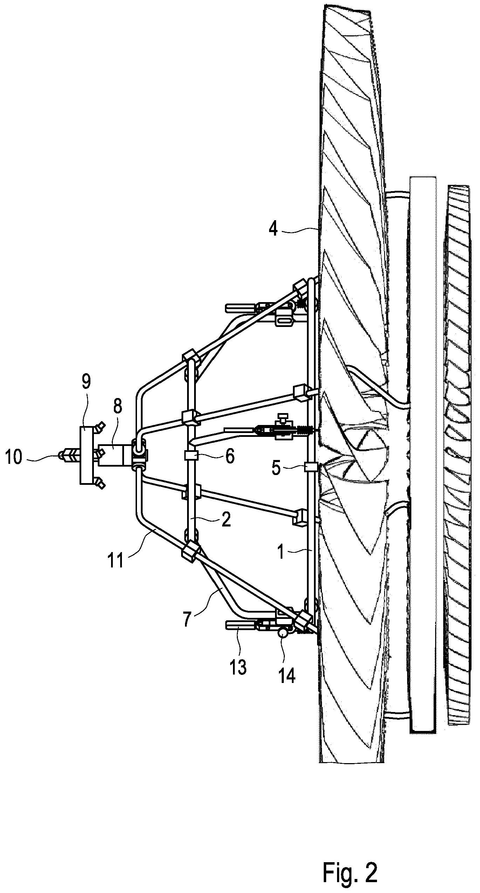

Fig. 2: Schematisch einen Axialschnitt durch das Triebwerk mit aufgesetzter erfindungsgemäßer Vorrichtung;

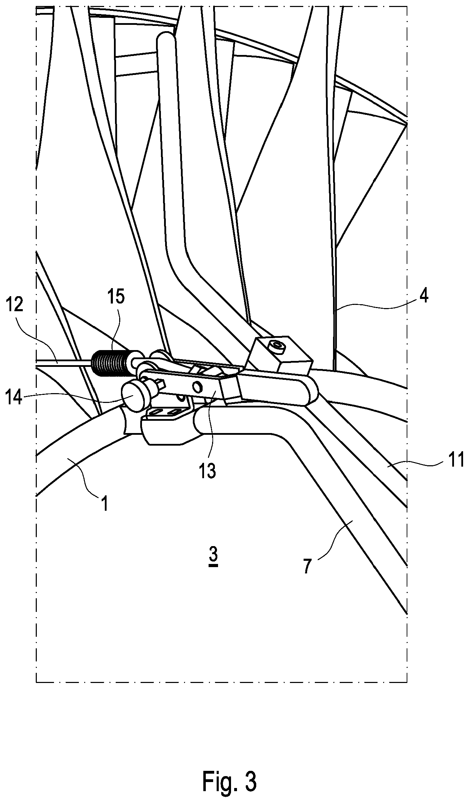

Fig. 3: In einer Detailansicht die Befestigung mittels eines Kniehebels;

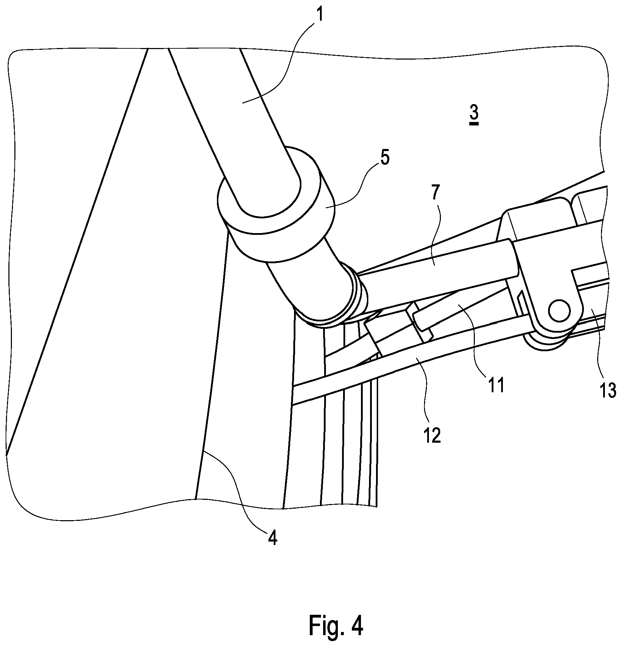

Fig. 4: In einer Detailansicht die Ausgestaltung der ersten Anlageflächen.

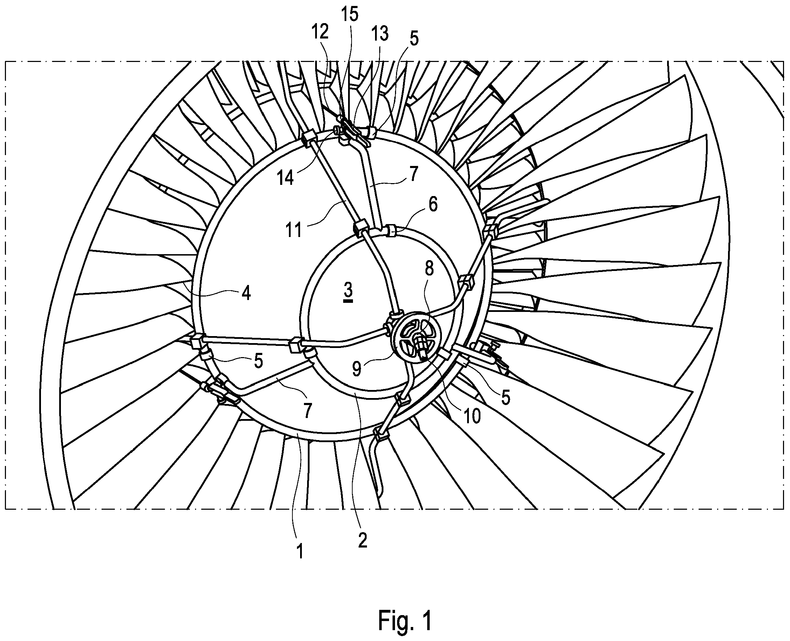

Die Düseneinrichtung weist zwei Ringbereiche bzw. Ringelemente 1, 2 auf, mit deren Hilfe die Düseneinrichtung auf eine Wellennabe bzw. einen Spinner 3 des Fans eines Strahltriebwerks aufgesetzt wird (siehe Fig. 1). Im aufgesetzten Zustand umschließen die Ringelemente 1, 2 den Spinner 3 im Wesentlichen formschlüssig. Der Innendurchmesser des axial stromab angeordneten Ringelements 1 ist geringfügig größer als der Außendurchmesser des Spinners 3 in der axialen Ebene, in der die Vorderkanten der Fan Blades 4 liegen.

Über den Umfang des ersten Ringelements 1 verteilte Gummipuffer 5 bilden erste Anlageflächen, mit denen das Ringelement 1 axial gegen die Vorderkante der Fan Blades 4 anliegt.

Über den Umfang des zweiten Ringelements 2 verteilte Gummipuffer 6 bilden zweite Anlageflächen, mit denen das Ringelement 2 auf dem Spinner 3 anliegt.

Die beiden Ringelemente 1, 2 sind durch Radialstreben 7 miteinander verbunden. An der stromauf weisenden Spitze der Düseneinrichtung (bezogen auf die Strömungsrichtung des Triebwerks) ist eine insgesamt mit 8 bezeichnete Drehkupplung angeordnet, die einen Stoßschutz 9 sowie ein Anschlussstück 10 einer Leitungsverbindung aufweist.

Von dieser Drehkupplung erstrecken sich vier radial nach außen führende Druckleitungen 11, die vier Düsen (nicht dargestellt) mit Reinigungsmedium speisen. Die Druckleitungen 11 sind an den Kreuzungspunkten mit den Ringelementen 1, 2 an diesen Ringelementen fixiert und somit Teil der Tragstruktur der gesamten Düseneinrichtung.

Zur Befestigung der Düseneinrichtung an dem Fan sind Spannseile 12 vorgesehen, die mittels nicht dargestellter Haken an den Hinterkanten des Fan Blades 4 eingehakt werden. Als Einzelbefestigungsmittel zur Fixierung der Spannseile 12 sind Kniehebel 13 vorgesehen, die mittels eines Sicherungsstifts 14 in der arretierten Stellung fixiert werden können. Eine Feder 15 sorgt für eine definierte Spannung der Spannseile 12.

Zum Reinigen der Core Engine wird die Düseneinrichtung in der insbesondere aus den Figur 1 erkennbaren Weise auf den Fan aufgesetzt und an den Fan Blades mittels der Spannseile 12 fixiert. Das Triebwerk wird in Drehung versetzt (dry-cranking). Über die Verbindungsleitung 10, die Drehkupplung 8 und die Druckleitungen 11 werden die Düsen mit Reinigungsmedium aus einer nicht dargestellten Versorgungseinrichtung gespeist. Dieses Reinigungsmedium überstreicht den Einlass der Core Engine über deren gesamten Umfang und führt so die Reinigung aus.

## Patentansprüche

1. Vorrichtung zum Reinigen der Core Engine eines Strahltriebwerks, mit einer Düseneinrichtung, die zum Einbringen von Reinigungsmedium in die Core Engine ausgebildet ist und Mittel zur drehfesten Verbindung mit der Welle des Fans des Strahltriebwerks aufweist; und mit einer Leitungsverbindung (10) zum Zuführen von Reinigungsmedium, die über eine Drehkupplung (8) mit der Düseneinrichtung verbunden ist, wobei die Düseneinrichtung erste Anlageflächen (5) zur axialen Anlage an den Fan Blades (4) aufweist, die zur definierten Positionierung der Düseneinrichtung relativ zum Strahltriebwerk ausgebildet sind, **dadurch gekennzeichnet, dass** die Mittel zur drehfesten Verbindung mit der Welle des Fans des Strahltriebwerks wenigstens zwei Spannseile (12) und Befestigungsmittel zum Befestigen der Spannseile (12) an den Fanblades umfassen, und dass die Befestigungsmittel als separat arretierbare Einzelbefestigungsmittel ausgebildet sind.

2. Vorrichtung nach Anspruch 1, **dadurch gekennzeichnet, dass** die ersten Anlageflächen (5) an einem ersten Ringbereich (1) der Düseneinrichtung angeordnet sind.

3. Vorrichtung nach Anspruch 1 oder 2, **dadurch gekennzeichnet, dass** die Düseneinrichtung zusätzlich zweite Anlageflächen (6) zur Anlage am Spinner (3) des Strahltriebwerks aufweist.

4. Vorrichtung nach Anspruch 3, **dadurch gekennzeichnet, dass** die zweiten Anlageflächen (6) an einem zweiten Ringbereich (2) der Düseneinrichtung angeordnet sind, der in Axialrichtung zwischen dem ersten Ringbereich (1) und der Drehkupplung (8) angeordnet ist.

5. Vorrichtung nach Anspruch 4, **dadurch gekennzeichnet, dass** die ersten und zweiten Anlageflächen (5, 6) zur Zentrierung der Vorrichtung auf dem Spinner (3) des Strahltriebwerks ausgebildet sind.

6. Vorrichtung nach Anspruch 5, **dadurch gekennzeichnet, dass** die Massenverteilung der Düseneinrichtung rotationssymmetrisch um deren Drehachse ist.

7. Vorrichtung nach einem der Ansprüche 1 bis 6, **dadurch gekennzeichnet, dass** die ersten und/oder zweiten Anlageflächen (5, 6) elastisch ausgebildet sind.

8. Vorrichtung nach einem der Ansprüche 1 bis 7, **dadurch gekennzeichnet, dass** die Mittel zur drehfesten Verbindung mit der Welle des Fans des Strahltriebwerks drei Spannseile (12) umfassen.

9. Vorrichtung nach Anspruch 8, **dadurch gekennzeichnet, dass** die Einzelbefestigungsmittel Kniehebel (13) aufweisen.

10. Vorrichtung nach einem der Ansprüche 8 oder 9, **dadurch gekennzeichnet, dass** die Einzelbefestigungsmittel Federelemente (15) zur Einstellung einer definierten Vorspannung der Spannseile (12) aufweisen.

11. Vorrichtung nach einem der Ansprüche 8 bis 10, **dadurch gekennzeichnet, dass** die Einzelbefestigungsmittel eine Sicherungseinrichtung (14) zur Sicherung im geschlossenen Zustand aufweisen.

12. Vorrichtung nach einem der Ansprüche 1 bis 11, **dadurch gekennzeichnet, dass** die Drehkupplung (8) einen Stoßschutz (9) aufweist.

13. Anordnung aus einem Strahltriebwerk und einer daran zur Vornahme einer Reinigung der Core Engine angebrachten Vorrichtung gemäß einem der Ansprüche 1 bis 12, mit den Merkmalen:
a. die Düseneinrichtung ist drehfest mit der Welle des Fans des Strahltriebwerks verbunden;
b. die Drehachsen des Fans des Strahltriebwerk und der Düseneinrichtung sind im Wesentlichen konzentrisch angeordnet;
c. die Düsen der Düseneinrichtung weisen einen radialen Abstand von der gemeinsamen Drehachse des Strahltriebwerks und der Vorrichtung auf, der kleiner ist als der Radius der Eintrittsöffnung der Core Engine;
d. die Austrittsöffnungen der Düsen sind in Axialrichtung hinter der Ebene des Fans angeordnet und/oder die Düsen sind in Zwischenräumen der Fanblades angeordnet oder auf Zwischenräume der Fanblades ausgerichtet, so dass die Düsenstrahlen im Wesentlichen ungehindert durch die Ebene des Fans hindurchtreten können;
**gekennzeichnet durch** die Merkmale:
e. die ersten Anlageflächen (5) der Düseneinrichtung liegen an Fan Blades (4) des Strahltriebwerks an und bewirken eine definierte axiale Positionierung der Düseneinrichtung relative zum Strahltriebwerk.

14. Anordnung nach Anspruch 13, **dadurch gekennzeichnet, dass** die ersten Anlageflächen (5) an einem ersten Ringbereich (1) der Düseneinrichtung angeordnet sind, dessen Innendurchmesser gegenüber dem Außendurchmesser des Spinners (3)gleich oder geringfügig größer ist.

15. Anordnung nach Anspruch 13 oder 14, **dadurch gekennzeichnet, dass** die Düseneinrichtung zusätzlich zweite Anlageflächen (6) aufweist, die an einem zweiten Ringbereich (2) der Düseneinrichtung angeordnet sind, der in Axialrichtung zwischen dem ersten Ringbereich (1) und der Drehkupplung (8) angeordnet ist; dass die zweiten Anlageflächen (6) auf dem Spinner (3) aufliegen; und dass die ersten und zweiten Anlageflächen die Vorrichtung auf dem Spinner des Strahltriebwerks zentrieren.

## Claims

1. Device for cleaning the core engine of a jet engine, having a nozzle installation which is configured for introducing cleaning medium into the core engine and has means for connecting in a rotationally fixed manner to the shaft of the fan of the jet engine; and having a line connection (10) which for supplying a cleaning medium is connected to the nozzle installation by way of a rotary coupling (8), wherein the nozzle installation has first contact faces (5) for bearing axially on the fan blades (4), said first contact faces (5) being configured for positioning the nozzle installation in a defined manner relative to the jet engine,
**characterized in that**
the means for the rotationally fixed connection to the shaft of the fan of the jet engine comprise at least two tensioning ropes (12) and fastening means for fastening the tensioning ropes (12) to the fan blades, and **in that** the fastening means are configured as individual fastening means that are able to be separately locked.

2. Device according to Claim 1, **characterized in that** the first contact faces (5) are disposed on a first annular region (1) of the nozzle installation.

3. Device according to Claim 1 or 2, **characterized in that** the nozzle installation additionally has two contact faces (6) for bearing on the spinner (3) of the jet engine.

4. Device according to Claim 3, **characterized in that** the second contact faces (6) are disposed on a second annular region (2) of the nozzle installation, said second annular region (2) in the axial direction being disposed between the first annular region (1) and the rotary coupling (8).

5. Device according to Claim 4, **characterized in that** the first and the second contact faces (5, 6) are configured for centring the device on the spinner (3) of the jet engine.

6. Device according to Claim 5, **characterized in that** the distribution of mass of the nozzle installation is rotationally symmetrical about the rotation axis of the latter.

7. Device according to one of Claims 1 to 6, **characterized in that** the first and/or the second contact faces (5, 6) are configured so as to be elastic.

8. Device according to one of Claims 1 to 7, **characterized in that** the means for the rotationally fixed connection to the shaft of the fan of the jet engine comprise three tensioning ropes (12) .

9. Device according to Claim 8, **characterized in that** the individual fastening means have bell crank levers (13).

10. Device according to one of Claims 8 or 9, **characterized in that** the individual fastening means have spring elements (15) for setting a defined preload of the tensioning ropes (12).

11. Device according to one of Claims 8 to 10, **characterized in that** the individual fastening means have a securing installation (14) for securing in the closed state.

12. Device according to one of Claims 1 to 11, **characterized in that** the rotary coupling (8) has an impact protection (9).

13. Assembly of a jet engine and a device according to one of Claims 1 to 12 attached thereto for performing cleaning of the core engine, said assembly having the following features:
a) the nozzle installation is connected in a rotationally fixed manner to the shaft of the fan of the jet engine;
b) the rotation axes of the fan of the jet engine and of the nozzle installation are disposed so as to be substantially concentric;
c) the nozzles of the nozzle installation have a radial spacing from the common rotation axis of the jet engine and of the device which is smaller than the radius of the entry opening of the core engine;
d) the exit openings of the nozzles in the axial direction are disposed behind the plane of the fan, and/or the nozzles are disposed in intermediate spaces of the fan blades or aligned towards intermediate spaces of the fan blades such that the nozzle jets can pass through the plane of the fan in a substantially unimpeded manner;
**characterized by** the following features:
e) the first contact faces (5) of the nozzle installation bear on fan blades (4) of the jet engine and cause a defined axial positioning of the nozzle installation relative to the jet engine.

14. Assembly according to Claim 13, **characterized in that** the first contact faces (5) are disposed on a first annular region (1) of the nozzle installation, the internal diameter of said first annular region (1) being equal to or slightly larger than the external diameter of the spinner (3).

15. Assembly according to Claim 13 or 14, **characterized in that** the nozzle installation additionally has second contact faces (6) which are disposed on a second annular region (2) of the nozzle installation, said second annular region (2) in the axial direction being disposed between the first annular region (1) and the rotary coupling (8); **in that** the second contact faces (6) bear on the spinner (3); and **in that** the first and the second contact faces centre the device on the spinner of the jet engine.

## Revendications

1. Dispositif pour le nettoyage du moteur central d'un turboréacteur, comprenant un appareil à buses, qui est configuré pour introduire un agent de nettoyage dans le moteur central et présente des moyens pour la liaison immobile en rotation avec l'arbre de la soufflante du turboréacteur ; et comprenant une liaison de conduite (10) pour l'amenée d'agent de nettoyage, qui est reliée par l'intermédiaire d'un accouplement rotatif (8) à l'appareil à buses, l'appareil à buses présentant des premières surfaces d'appui (5) pour l'appui axial sur les pales de soufflante (4), qui sont configurées pour le positionnement défini de l'appareil à buses par rapport au turboréacteur, **caractérisé en ce que** les moyens pour la liaison immobile en rotation avec l'arbre de la soufflante du turboréacteur comprennent au moins deux câbles de tension (12) et des moyens de fixation pour fixer les câbles de tension (12) aux pales de soufflante, et **en ce que** les moyens de fixation sont configurés sous forme de moyens de fixation individuels pouvant être bloqués séparément.

2. Dispositif selon la revendication 1, **caractérisé en ce que** les premières surfaces d'appui (5) sont agencées sur une première zone annulaire (1) de l'appareil à buses.

3. Dispositif selon la revendication 1 ou 2, **caractérisé en ce que** l'appareil à buses présente en outre des deuxièmes surfaces d'appui (6) pour l'appui sur le cône (3) du turboréacteur.

4. Dispositif selon la revendication 3, **caractérisé en ce que** les deuxièmes surfaces d'appui (6) sont agencées sur une deuxième zone annulaire (2) de l'appareil à buses, qui est agencée dans la direction axiale entre la première zone annulaire (1) et l'accouplement rotatif (8).

5. Dispositif selon la revendication 4, **caractérisé en ce que** les premières et deuxièmes surfaces d'appui (5, 6) sont configurées pour centrer le dispositif sur le cône (3) du turboréacteur.

6. Dispositif selon la revendication 5, **caractérisé en ce que** la distribution de masse de l'appareil à buses est symétrique par rotation autour de son axe de rotation.

7. Dispositif selon l'une quelconque des revendications 1 à 6, **caractérisé en ce que** les premières et/ou deuxièmes surfaces d'appui (5, 6) sont configurées sous forme élastique.

8. Dispositif selon l'une quelconque des revendications 1 à 7, **caractérisé en ce que** les moyens pour la liaison immobile en rotation avec l'arbre de la soufflante du turboréacteur comprennent trois câbles de tension (12).

9. Dispositif selon la revendication 8, **caractérisé en ce que** les moyens de fixation individuels comprennent des genouillères (13).

10. Dispositif selon l'une quelconque des revendications 8 et 9, **caractérisé en ce que** les moyens de fixation individuels présentent des éléments à ressort (15) pour le réglage d'une précontrainte définie des câbles de tension (12).

11. Dispositif selon l'une quelconque des revendications 8 à 10, **caractérisé en ce que** les moyens de fixation individuels présentent un appareil de sécurisation (14) pour la sécurisation à l'état fermé.

12. Dispositif selon l'une quelconque des revendications 1 à 11, **caractérisé en ce que** l'accouplement rotatif (8) présente une protection contre les chocs (9).

13. Agencement d'un turboréacteur et d'un dispositif selon l'une quelconque des revendications 1 à 12, monté sur celui-ci pour effectuer un nettoyage du moteur central, ayant les caractéristiques suivantes :
a. l'appareil à buses est relié de manière immobile en rotation avec l'arbre de la soufflante du turboréacteur ;
b. les axes de rotation de la soufflante du turboréacteur et de l'appareil à buses sont agencés de manière essentiellement concentrique ;
c. les buses de l'appareil à buses présentent une distance radiale par rapport à l'axe de rotation commun du turboréacteur et du dispositif, qui est inférieure au rayon de l'ouverture d'entrée du moteur central ;
d. les ouvertures de sortie des buses sont agencées dans la direction axiale derrière le plan de la soufflante et/ou les buses sont agencées dans des interstices des pales de soufflante ou sont dirigées vers des interstices des pales de soufflante, de telle sorte que les jets des buses peuvent traverser essentiellement sans entrave le plan de la soufflante ; **caractérisé par** les caractéristiques suivantes :
e. les premières surfaces d'appui (5) de l'appareil à buses sont situées sur des pales de soufflante (4) du turboréacteur et provoquent un positionnement axial défini de l'appareil à buses par rapport au turboréacteur.

14. Agencement selon la revendication 13, **caractérisé en ce que** les premières surfaces d'appui (5) sont agencées sur une première zone annulaire (1) de l'appareil à buses, dont le diamètre intérieur est égal ou légèrement supérieur au diamètre extérieur du cône (3).

15. Agencement selon la revendication 13 ou 14, **caractérisé en ce que** l'appareil à buses présente en outre des deuxièmes surfaces d'appui (6), qui sont agencées sur une deuxième zone annulaire (2) de l'appareil à buses, qui est agencée dans la direction axiale entre la première zone annulaire (1) et l'accouplement rotatif (8) ; **en ce que** les deuxièmes surfaces d'appui (6) reposent sur le cône (3) ; et **en ce que** les premières et deuxièmes surfaces d'appui centrent le dispositif sur le cône du turboréacteur.
